# FASCICULE DE BREVET EUROPEEN

(11) **EP 0 888 244 B1**
(45) Date de publication et mention de la délivrance du brevet: **19.01.2000**
(21) Numéro de dépôt: 97915508.2
(22) Date de dépôt: 17.03.1997
(51) Int. Cl.: C01B 15/023, D21C 9/16

(54) **PROCEDE ET INSTALLATION DE FOURNITURE DE PEROXYDE D'HYDROGENE A DEBIT VARIABLE**
VERFAHREN UND VORRICHTUNG ZUM EINBRINGEN EINES VARIABELEN DURCHFLUSSES VON WASSERSTOFFPEROXID
METHOD AND APPARATUS FOR DELIVERING A VARIABLE FLOW OF HYDROGEN PEROXIDE

(30) Priorité: 18.03.1996 FR 9603356
(43) Date de publication de la demande: 07.01.1999
(73) Titulaire: ELF ATOCHEM S.A., 92800 Puteaux, Hauts-de-Seine (FR)
(72) Inventeur: LEPOUTRE, Etienne, F-78100 Saint-Germain-en-Laye (FR)
(86) Numéro de dépôt international: FR9700473
(87) Numéro de publication internationale: WO9734828

(56) Documents cités:
- WO-A-93/21106
- CA-A- 2 098 062

## Description

La présente invention est relative à la fourniture de peroxyde d'hydrogène à débit variable à une unité consommatrice, notamment à une unité de blanchiment de pâte à papier faisant partie d'une usine de production de pâte à papier.

Les concentrations de peroxyde d'hydrogène dont il est question sont des concentrations en poids, en solution dans de l'eau.

Il a déjà été proposé de produire in situ le peroxyde d'hydrogène consommé par une unité de blanchiment de pâte à papier, ce peroxyde étant directement véhiculé par canalisation de l'appareil de production à une unité de blanchiment.

Cependant, cette technique pose fréquemment le problème suivant : l'unité de blanchiment demande un débit de peroxyde d'hydrogène qui varie dans une plage largement supérieure à la souplesse de l'appareil de production.

Les débits dont il est question ici sont des débits ramenés à la concentration 100% de peroxyde d'hydrogène.

L'invention a pour but de surmonter cette difficulté. A cet effet, elle a pour objet un procédé d'alimentation en peroxyde d'hydrogène ayant une concentration prédéterminée C1, d'une unité consommatrice d'un débit variable D de peroxyde d'hydrogène, notamment d'une unité de blanchiment de pâte à papier, caractérisé en ce que :
- on produit, sur le site de l'unité consommatrice ou à proximité immédiate de ce site, du peroxyde d'hydrogène ayant une concentration C2 supérieure ou égale à la valeur C1;
- on stocke temporairement le peroxyde d'hydrogène ainsi produit dans au moins une capacité-tampon; et
- on soutire de la capacité-tampon un débit variable de peroxyde d'hydrogène qui, éventuellement après dilution, correspond audit débit D, et on l'envoie à l'unité consommatrice.

Le procédé suivant l'invention peut comporter une ou plusieurs des caractéristiques suivantes :
- en cas de descente du niveau de liquide dans la capacité-tampon jusqu'à un niveau bas prédéterminé, on soutire d'un réservoir de secours du peroxyde d'hydrogène ayant notamment une concentration C3 nettement supérieure à la valeur C1, on le dilue éventuellement avec de l'eau jusqu'à la concentration C1, et on l'envoie à l'unité consommatrice;
- pour l'alimentation d'une unité consommatrice acceptant du peroxyde d'hydrogène ayant une concentration C3 nettement supérieure à la valeur C1, en cas de descente du niveau de liquide dans la capacité-tampon jusqu'à un niveau bas prédéterminé, on soutire d'un réservoir de secours du peroxyde d'hydrogène ayant la concentration C3, et on l'envoie à l'unité consommatrice;
- le débit consommé D varie de 0 à une valeur D1, et le débit produit varie entre deux valeurs D2 et D3 telles que D3-D2 < D1;
- les valeurs D2 et D3 représentent respectivement 50 et 110% environ d'un débit nominal DN de production de peroxyde d'hydrogène, tandis que la valeur D1 représente environ 400% de cette valeur DN;
- la valeur C2 est comprise entre 2 et 45% environ, et notamment entre 15 et 30% environ, tandis que la valeur C3, lorsque l'on utilise un réservoir de secours, est comprise entre 45 et 80% environ.

L'invention a également pour objet une installation destinée à la mise en oeuvre d'un procédé tel que défini ci-dessus, cette installation comprenant:
- un appareil de production de peroxyde d'hydrogène à une concentration C2;
- au moins une capacité-tampon reliée par une canalisation à l'appareil de production; et
- une unité consommatrice d'un débit variable D de peroxyde d'hydrogène, reliée par une canalisation à la capacité-tampon.

Suivant d'autres caractéristiques de cette installation :
- l'installation comprend en outre un réservoir de secours contenant du peroxyde d'hydrogène à une concentration C3 qui est notamment nettement supérieure à la concentration C1 du peroxyde d'hydrogène consommé par l'unité consommatrice, et relié à celle-ci par une autre canalisation;
- l'installation comprend en outre un appareil de dilution interposé entre le réservoir de secours et l'unité consommatrice;
- l'appareil de dilution est également interposé entre l'appareil de production et l'unité consommatrice.

Des exemples de mise en oeuvre de l'invention vont maintenant être décrits en regard des dessins annexés, sur lesquels :
- les Figures 1 à 4 représentent schématiquement trois variantes de l'installation suivant l'invention;
- la Figure 5 représente schématiquement la capacité-tampon; et
- la Figure 6 représente schématiquement l'appareil de production de peroxyde d'hydrogène.

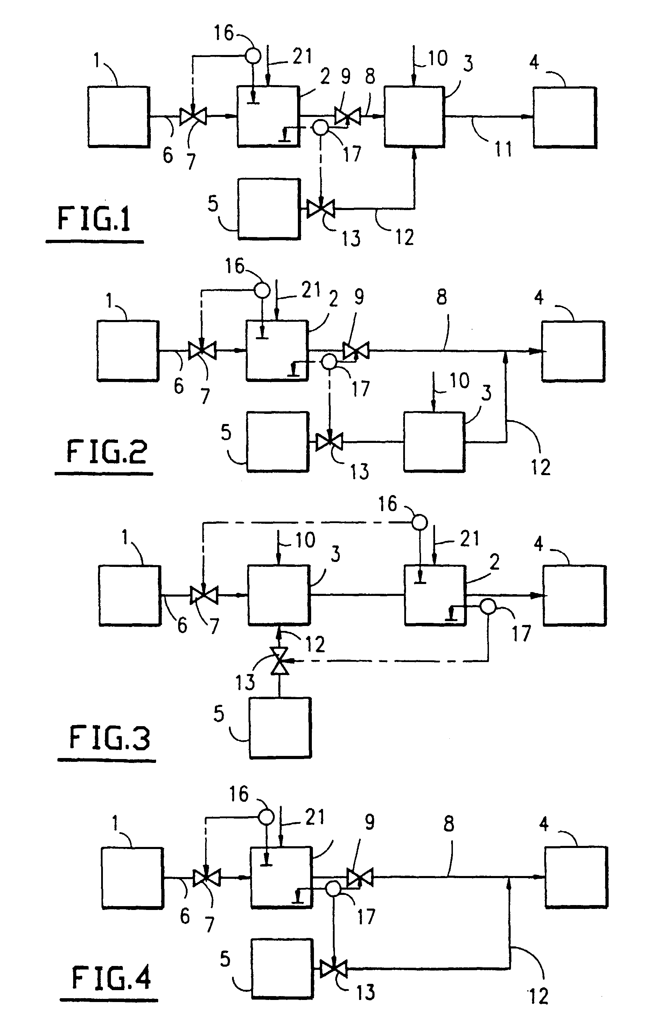

L'installation représentée schématiquement sur la Figure 1 comprend essentiellement un appareil 1 de production de peroxyde d'hydrogène, une capacité-tampon 2, un appareil de dilution 3, une unité 4 de blanchiment de pâte à papier qui fait partie d'une usine de production de pâte à papier, et un réservoir de secours 5.

L'unité 4 consomme un débit D fortement variable, compris entre 0 et une valeur D1, de peroxyde d'hydrogène ayant une concentration prédéterminée C1, tandis que l'appareil 1 produit du peroxyde d'hydrogène à une concentration C2 > C1 mais avec un débit pouvant varier entre deux valeurs D2 et D3 telles que D3 - D2 soit très inférieur à D1.

A titre d'exemple numérique, D1 = 4DN, où DN est le débit nominal de production de l'appareil 1, D2 = 0,6 DN, D3 = 1,1 DN, DN peut être compris entre 230 et 2300 kg/h, et C2 est ordinairement compris entre 2 et 45% et, généralement, entre 15 et 30%.

La sortie de production de l'appareil 1 est reliée à l'entrée de la capacité-tampon par une canalisation 6 munie d'une vanne 7. La sortie de la capacité-tampon est reliée à l'entrée de l'appareil 3 par une canalisation 8 munie d'une vanne 9, l'appareil 3 étant également alimenté en eau déminéralisée par une canalisation 10. La sortie de l'appareil 3 est reliée à l'unité 4 par une canalisation 11. Le réservoir 5 est relié par une canalisation 12 munie d'une vanne 13 à l'appareil 3.

La capacité-tampon 2 (Figure 4) est un réservoir en acier inoxydable, en polyéthylène ou en aluminium, muni à son sommet d'un trou d'homme 14 et d'un évent 15 équipé d'un filtre. Elle comporte intérieurement un détecteur de niveau haut 16 et un détecteur de niveau bas 17. Le détecteur 16 est adapté pour fermer la vanne 7 lorsque le niveau haut est atteint, et le détecteur 18 est adapté pour fermer la vanne 9 et ouvrir la vanne 13 lorsque le niveau bas est atteint.

En fonctionnement normal, le niveau N du liquide dans la capacité-tampon est compris entre N1 et N2, de sorte que les vannes 7 et 9 sont ouvertes tandis que la vanne 13 est fermée. Le réservoir 5 contient du peroxyde d'hydrogène "marchand", c'est-à-dire du peroxyde d'hydrogène produit à distance du site de l'installation et livré par des véhicules-citernes, généralement par camions. Le peroxyde d'hydrogène marchand a généralement une concentration comprise entre 45 et 80%, et souvent de l'ordre de 70%.

Ainsi, le débit D demandé à chaque instant par l'unité 4 est soutiré de la capacité-tampon 2, compte-tenu de la dilution en 3 nécessaire pour l'amener à la concentration C1. Simultanément, le peroxyde produit par l'appareil 1 parvient directement à la capacité-tampon 2 à la concentration C2 et avec un débit compris entre D2 et D3.

Si le débit soutiré de la capacité-tampon est compris entre D2 et D3, l'appareil 1 suit les variations du débit demandé par l'unité 4, pour maintenir le niveau N à une valeur sensiblement constante et éventuellement, grâce à des variations plus importantes du débit de production, pour rétablir un niveau moyen prédéterminé dans la capacité-tampon. Le volume de cette dernière est calculé pour permettre de suivre en permanence les variations du débit consommé, compte-tenu des caractéristiques de l'unité 4.

Si, néanmoins, le débit consommé provoque un soutirage excessif de peroxyde d'hydrogène à partir de la capacité-tampon, lorsque le niveau N atteint le niveau bas N2, le détecteur 17, après avoir éventuellement fermé la vanne 9, ouvre la vanne 13. Ceci permet au niveau N se stabiliser ou de remonter, et le peroxyde d'hydrogène consommé est au moins en partie soutiré du réservoir 5, après dilution en 3. Bien entendu, le débit d'eau introduit dans l'appareil 3 est alors augmenté pour rétablir en sortie, dans la canalisation 11, la concentration C1 désirée.

Si au contraire le débit consommé baisse dans une mesure telle que le niveau N monte jusqu'au niveau haut N1, le détecteur 16 ferme la vanne 7 et, si ces conditions persistent, il peut être alors nécessaire d'arrêter l'appareil de production 1.

De préférence, on déterminera le volume du réservoir 5 de manière qu'il permette d'alimenter l'unité 4 pendant les phases d'arrêt et d'entretien de l'appareil de production 1.

L'installation représentée à la Figure 2 ne diffère de celle de la Figure 1 que par le fait que l'appareil 1 produit le peroxyde d'hydrogène à la concentration C1. Par conséquent, l'appareil de dilution 3 est disposé uniquement sur la canalisation 12 et n'intervient que lorsque, par suite d'une baisse excessive du niveau N, le réservoir de secours 5 est mis en service.

L'installation de la Figure 3 ne diffère de celle de la Figure 1 que par le fait que l'appareil de dilution 3 est disposé sur la canalisation 6, entre la vanne 7 et la capacité-tampon 2. La vanne pilotée 9, n'étant plus nécessaire, a été supprimée, de sorte que le détecteur de niveau 17 ne commande que la vanne 13.

L'installation de la Figure 4 ne diffère de celle de la Figure 2 que par la suppression de l'appareil de dilution 3. Ceci correspond au cas où l'unité 4 peut consommer du peroxyde d'hydrogène soit à la concentration C1 de l'appareil de production, soit à la concentration C3 du peroxyde marchand contenu dans le réservoir de secours 1.

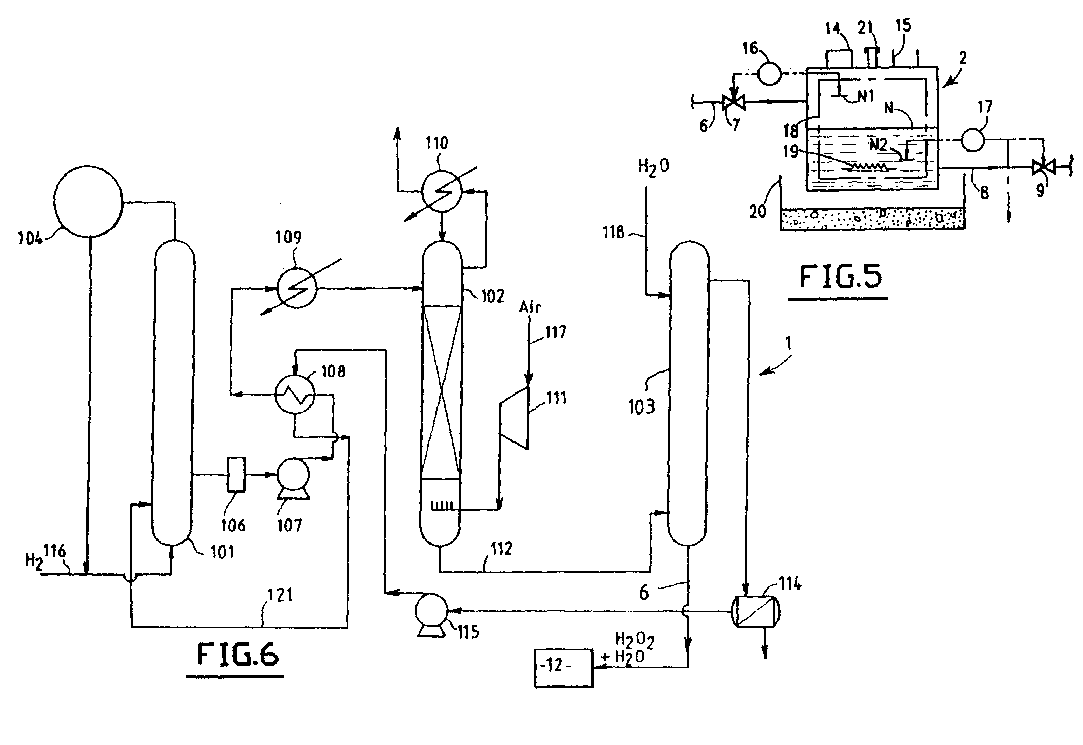

Comme représenté en traits mixtes sur la Figure 5, la capacité-tampon 2 peut être équipée d'une isolation thermique 18 et/ou de moyens de réchauffage 19, pour éviter tout risque de cristallisation par temps froid. De plus, la capacité-tampon est de préférence disposée au-dessus d'une fosse de rétention 20 adaptée pour recueillir d'éventuelles fuites de peroxyde d'hydrogène.

Dans chaque mode de mise en oeuvre de l'invention, la capacité-tampon comporte des moyens 21 d'injection dans la capacité-tampon (ou en variante, dans l'appareil de dilution 3) d'un stabilisant de type connu, choisi par exemple parmi les composés carboxyliques, aminométhylène-carboxyliques, phosphoniques et aminométhylènephosphoniques, en particulier l'acide éthylènediamine tétraacétique (EDTA) ou ses sels, l'acide di-éthylènetriaminepentaacétique (DTPA) ou ses sels, les acides polyacryliques, l'acide diéthylène- triaminepentaméthylènephosphonique ou ses sels, l'acide diamino-1,2NNN'N' tétraméthylènephosphonique ou ses sels, l'acide hydroxyéthylbisméthylènephosphonique ou ses sels.

Le stabilisant permet d'éviter la décomposition du peroxyde d'hydrogène à concentration relativement faible jusqu'à l'injection de ce peroxyde d'hydrogène dans l'unité 4.

En variante, l'installation suivant l'invention peut comporter plusieurs capacités-tampons 2.

L'appareil 1 de production de peroxyde d'hydrogène est de préférence du type mettant en oeuvre un procédé d'auto-oxydation de dérivés anthraquinoniques, bien connu dans la technique. Un appareil de ce type est représenté schématiquement sur la Figure 5.

L'appareil de la Figure 5 comprend trois appareils principaux en forme de colonnes: un hydrogénateur catalytique 101, un oxydeur à contre-courant 102, et un extracteur à eau 103. Il comporte également de nombreux équipements associés à ces trois appareils, dont seuls certains ont été représentés : un ensemble surpresseur-condenseur 104 de recirculation du mélange gazeux contenant l'hydrogène, associé à l'hydrogénateur; un filtre 106, une pompe 107, un échangeur de chaleur 108, un réfrigérant à eau 109, un condenseur de tête 110 et un compresseur d'air 111 associés à l'oxydeur; une conduite 112, aussi courte que possible, reliant la base de l'oxydeur 102 à celle de l'extracteur 103 ; et un coalesceur 114 et une pompe 115 pour le recyclage de la solution de travail.

On a également représenté sur la figure 5 une conduite 116 d'alimentation de l'hydrogénateur en hydrogène d'appoint, une conduite 117 d'alimentation en air du compresseur 111, une conduite 118 d'alimentation de l'extracteur 103 en eau déminéralisée, la canalisation 6 de production de peroxyde d'hydrogène, qui part de la base de l'extracteur 103, et une conduite 121 de recyclage de la solution de travail.

L'appareil de production de peroxyde d'hydrogène comprend de nombreux autres équipements bien connus dans la technique et non représentés, tels que des moyens de régénération de produits dégradés de la solution de travail, de mise en oeuvre du catalyseur, de récupération de solvant, etc.

En fonctionnement, la solution de travail, constituée d'au moins un dérivé anthraquinonique et d'au moins un solvant organique, est introduite à la base de l'hydrogénateur 101 via la conduite de recyclage 121 reliée au refoulement de la pompe 115, et un courant de gaz contenant de l'hydrogène est également introduit à la base de l'hydrogénateur. Ce courant gazeux est constitué d'une part du courant gazeux soutiré au sommet de l'hydrogénateur, recirculé par l'ensemble surpresseur-condenseur 104, et d'autre part d'hydrogène d'appoint arrivant via la conduite 116.

La solution de travail est ainsi partiellement réduite. La solution réduite, soutirée de la base de l'hydrogénateur par la pompe 107 via le filtre 106, contient donc des dérivés hydroquinoniques (par exemple 80% de tétrahydroanthrahydroquinone et 20% d'anthrahydroquinone).

Le dérivé anthraquinonine constitutif de la solution de travail est choisi de préférence parmi les 2 alkyl 9,10 anthraquinones dans lesquelles le substituant alkyle comprend de 1 à 5 atomes de carbone, tel que les radicaux méthyle, éthyle, sec-butyle, tertio-butyle, tertio-amyle, ainsi que les dérivés tétrahydro-5,6,7,8 correspondants, ou parmi les dialkyl 9,10 anthraquinones dans lesquelles les substituants alkyle identiques ou différents comprennent de 1 à 5 atomes de carbone, tel que les radicaux méthyle, éthyle, tertiobutyle, par exemple 1,3 diméthyle, 1,4 diméthyle, 2,3 diméthyle, 2,7 diméthyle, 1,3 diéthyle, 2,7 ditertiobutyle, 2 éthyle 6 tertiobutyle et les dérivés tétrahydro-5,6,7,8 correspondants. Le solvant organique constitutif de la solution de travail est de préférence un mélange d'un composé non polaire et d'un composé polaire. Le composé non polaire est choisi de préférence parmi les coupes pétrolières à point d'ébullition supérieur à 140 C contenant majoritairement des hydrocarbures aromatiques comportant au moins 9 atomes de carbone, tel que les isomères du triméthylbenzène, les isomères du tétraméthylbenzène, le tertiobutylbenzène, les isomères du méthylnaphtalène, les isomères du diméthylnaphtalène. Le composé polaire est choisi de préférence parmi les alcools saturés comportant de préférence de 7 à 11 atomes de carbone, tels que le diisobutylcarbinol, le triméthyl-3,5,5 hexanol, l'isoheptanol, les esters d'acides carboxyliques tels que l'acétate de méthyle cyclohexyl commercialisé sous le nom de "Sextate", l'acétate d'heptyle, le benzoate de butyle, l'heptanoate d'éthyle, les esters de l'acide phosphorique tels que le phosphate de tributyle, le phosphate de tri (2 éthyl butyle), le phosphate de tri (2 éthyle hexyle), le phosphate de tri (n-octyle), les urées tétrasubstituées telle que la tétra (n-butyl urée).

On entendra ci-dessous par "équivalent peroxyde d'hydrogène", la quantité de peroxyde d'hydrogène, exprimée en grammes, qu'un litre de solution de travail est susceptible de fournir à l'issue de l'étape d'oxydation si le rendement de cette étape dans l'oxydeur 102 est de 100%. Cette concentration massique potentielle en peroxyde correspond à une concentration molaire qui est égale à la concentration molaire de l'ensemble des formes anthrahydroquinoniques réoxydables dans la solution de travail. Elle dépend d'une part de la concentration en formes anthraquinoniques de la solution de travail de départ, et d'autre part des conditions d'hydrogénation en 101.

Dans le cas présent, on effectue l'hydrogénation à une température comprise entre 50 et 70 C, avec une pression dans le ciel gazeux de l'hydrogénateur (pression qui régule le débit d'hydrogène) de 0,8 à 1,5 bar environ, et on règle l'équivalent peroxyde d'hydrogène à une valeur comprise entre 7 et 9 g/l environ, par ajustement du temps de séjour dans l'hydrogénateur, pour une concentration donnée en formes anthraquinoniques.

La solution de travail réduite soutirée de l'hydrogénateur est filtrée en 106 pour éliminer toute trace de catalyseur, puis refroidie en 108 puis en 109 jusqu'à une température de l'ordre de 35 à 40 C. La pression du ciel gazeux de l'oxydeur est maintenue à une valeur comprise entre 2 et 4 bars. La solution de travail réduite est ainsi oxydée en 102, le fluide de tête de l'oxydeur étant partiellement condensé en 110.

Le peroxyde d'hydrogène formé par la réaction d'oxydation est soutiré de la base de l'oxydeur, dans une quantité égale au produit de l'équivalent peroxyde d'hydrogène précité par le rendement de l'oxydeur, en mélange avec la solution de travail de nouveau oxydée. Ce liquide est envoyé directement via la conduite 112, grâce à la différence de pression motrice à la base de l'extracteur 103, lequel fonctionne un peu au-dessus de la pression atmosphérique. Dans l'extracteur s'effectue une extraction liquide-liquide au moyen de l'eau déminéralisée introduite au sommet de l'extracteur.

On soutire de la base de ce dernier une solution eau-peroxyde d'hydrogène, dont la concentration en peroxyde d'hydrogène est réglée sur la valeur nécessaire pour son utilisation directe dans l'unité de blanchiment 4.

La solution de travail séparée du peroxyde d'hydrogène est soutirée du sommet de l'extracteur 103, débarrassée des gouttelettes de phase aqueuse qu'elle a entraînées dans le coalesceur 114, puis envoyée par la pompe 115 à l'échangeur de chaleur 108, dans lequel elle se réchauffe, et, de là, recyclée à la base de l'hydrogénateur 101.

L'oxydeur 102 comporte une enveloppe extérieure contenant un garnissage organisé, ou des plateaux perforés simples ou des plateaux du type des plateaux de distillation, c'est-à-dire avec chacun une garde de liquide, des orifices de bullage du gaz montant à travers cette garde, et des moyens de descente de liquide d'un plateau au suivant, ou encore une combinaison d'un garnissage organisé et de tels plateaux.

## Revendications

1. Procédé d'alimentation en peroxyde d'hydrogène ayant une concentration prédéterminée C1, d'une unité (4) consommatrice d'un débit variable D de peroxyde d'hydrogène, notamment d'une unité de blanchiment de pâte à papier, caractérisé en ce que :
- on produit (en 1), sur le site de l'unité consommatrice ou à proximité immédiate de ce site, du peroxyde d'hydrogène ayant une concentration C2 supérieure ou égale à la valeur C1;
- on stocke temporairement le peroxyde d'hydrogène ainsi produit dans au moins une capacité-tampon (2); et
- on soutire de la capacité-tampon un débit variable de peroxyde d'hydrogène qui, éventuellement après dilution (en 3), correspond audit débit D, et on l'envoie à l'unité consommatrice (4).

2. Procédé suivant la revendication 1, caractérisé en ce que , en cas de descente du niveau de liquide dans la capacité-tampon (2) jusqu'à un niveau bas prédéterminé (N2), on soutire d'un réservoir de secours (5) du peroxyde d'hydrogène ayant notamment une concentration C3 nettement supérieure à la valeur C1, on le dilue éventuellement avec de l'eau jusqu'à la concentration C1, et on l'envoie à l'unité consommatrice (4).

3. Procédé suivant la revendication 1, pour l'alimentation d'une unité consommatrice (4) acceptant du peroxyde d'hydrogène ayant une concentration C3 nettement supérieure à la valeur C1, caractérisé en ce que, en cas de descente du niveau de liquide dans la capacité-tampon (2) jusqu'à un niveau bas prédéterminé (N2), on soutire d'un réservoir de secours (5) du peroxyde d'hydrogène ayant la concentration C3, et on l'envoie à l'unité consommatrice (4).

4. Procédé suivant l'une quelconque des revendications 1 à 3, caractérisé en ce que le débit consommé D varie de 0 à une valeur D1, et le débit produit varie entre deux valeurs D2 et D3 telles que D3-D2 < D1.

5. Procédé suivant la revendication 4, caractérisé en ce que les valeurs D2 et D3 représentent respectivement 50 et 110% environ d'un débit nominal DN de production de peroxyde d'hydrogène, tandis que la valeur D1 représente environ 400% de cette valeur DN.

6. Procédé suivant l'une quelconque des revendications 1 à 5, caractérisé en ce que la valeur C2 est comprise entre 2 et 45% environ, et notamment entre 15 et 30% environ, tandis que la valeur C3, lorsque l'on utilise un réservoir de secours (5), est comprise entre 45 et 80% environ.

7. Installation pour la mise en oeuvre d'un procédé suivant l'une quelconque des revendications 1 à 6, caractérisée en ce qu'elle comprend :
- un appareil (1) de production de peroxyde d'hydrogène à une concentration C2;
- au moins une capacité-tampon (2) reliée par une canalisation (6) à l'appareil de production; et
- une unité (4) consommatrice d'un débit variable D de peroxyde d'hydrogène, reliée par une canalisation (8, 11; 8) à la capacité-tampon.

8. Installation suivant la revendication 7, caractérisée en ce qu'elle comprend en outre un réservoir de secours (5) contenant du peroxyde d'hydrogène à une concentration C3 qui est notamment nettement supérieure à la concentration C1 du peroxyde d'hydrogène consommé par l'unité consommatrice (4), et relié à celle-ci par une autre canalisation (12, 8, 11; 12, 8).

9. Installation suivant la revendication 8, caractérisée en ce qu'elle comprend en outre un appareil de dilution (3) interposé entre le réservoir de secours (5) et l'unité consommatrice (4).

10. Installation suivant la revendication 9, caractérisée en ce que l'appareil de dilution (3) est également interposé entre l'appareil de production (1) et l'unité consommatrice (4).

11. Installation suivant l'une quelconque des revendications 7 à 10, caractérisée en ce que la capacité-tampon (2) est équipée d'une isolation thermique (18) et/ou de moyens de réchauffage (19).

12. Installation suivant l'une quelconque des revendications 7 à 11, caractérisé en ce que l'appareil de production (1) est adapté pour fournir un débit de peroxyde d'hydrogène variable entre deux valeurs D2 et D3 telles que D3-D2 < D1, où D1 est le débit maximal consommé par l'unité consommatrice (4).

## Claims

1. Method for supplying hydrogen peroxide having a predetermined concentration C1 to a unit (4) which consumes hydrogen peroxide at a variable rate R, in particular a unit for bleaching paper pulp, characterized in that:
- hydrogen peroxide having a concentration C2 greater than or equal to the value C1 is generated (in 1) on the site of the consumer unit or in the immediate proximity of this site;
- the hydrogen peroxide thus generated is temporarily stored in at least one holding tank (2); and
- hydrogen peroxide is drawn from the holding tank at a variable rate which, optionally after dilution (in 3), corresponds to the said rate R and is fed to the consumer unit (4).

2. Method according to Claim 1, characterized in that, in the event of the liquid level in the holding tank (2) falling to a predetermined low level (N2), hydrogen peroxide having in particular a concentration C3 markedly greater than the value C1 is drawn from a back-up tank (5), is optionally diluted with water to the concentration C1 and is fed to the consumer unit (4).

3. Method according to Claim 1 for supplying a consumer unit (4) which accepts hydrogen peroxide having a concentration C3 markedly greater than the value C1, characterized in that, in the event of the liquid level in the holding tank (2) falling to a predetermined low level (N2), hydrogen peroxide having the concentration C3 is drawn from a back-up tank (5) and is fed to the consumer unit (4).

4. Method according to any one of Claims 1 to 3, characterized in that the rate consumed R varies from 0 to a value R1 and the rate generated varies between two values R2 and R3 such that R3-R2 < R1.

5. Method according to Claim 4, characterized in that the values R2 and R3 respectively represent 50 and 110% approximately of a nominal hydrogen peroxide generation rate NR, whereas the value R1 represents approximately 400% of this NR value.

6. Method according to any one of Claims 1 to 5, characterized in that the value C2 is between 2 and 45% approximately and in particular between 15 and 30% approximately, whereas the value C3, when a back-up tank (5) is used, is between 45 and 80% approximately.

7. Plant for the implementation of a method according to any one of Claims 1 to 6, characterized in that it comprises:
- an apparatus (1) for the generation of hydrogen peroxide at a concentration C2;
- at least one holding tank (2) connected via a pipe (6) to the generation apparatus; and
- a unit (4) which consumes hydrogen peroxide at a variable rate R, connected via a pipe (8, 11; 8) to the holding tank.

8. Plant according to Claim 7, characterized in that it additionally comprises a back-up tank (5) which contains hydrogen peroxide at a concentration C3 which is in particular markedly greater than the concentration C1 of the hydrogen peroxide consumed by the consumer unit (4) and which is connected to the latter via another pipe (12, 8, 11; 12, 8).

9. Plant according to Claim 8, characterized in that it additionally comprises a dilution apparatus (3) inserted between the back-up tank (5) and the consumer unit (4).

10. Plant according to Claim 9, characterized in that the dilution apparatus (3) is also inserted between the generation apparatus (1) and the consumer unit (4).

11. Plant according to any one of Claims 7 to 10, characterized in that the holding tank (2) is equipped with thermal insulation (18) and/or with reheating means (19).

12. Plant according to any one of Claims 7 to 11, characterized in that the generation apparatus (1) is adjusted in order to deliver a hydrogen peroxide rate variable between two values R2 and R3 such that R3-R2 < R1, where R1 is the maximum rate consumed by the consumer unit (4).

## Patentansprüche

1. Verfahren zum Einbringen von Wasserstoffperoxid einer vorbestimmten Konzentration C1 in eine eine variable Menge D des Wasserstoffperoxids verarbeitende Einheit (4), insbesondere in eine Einheit zum Bleichen einer Papiermasse, dadurch gekennzeichnet, daß:
- man am Standort der verarbeitenden Einheit oder in unmittelbarer Nähe dieses Standorts Wasserstoffperoxid einer Konzentration C2, die höher oder gleich dem Wert C1 ist, erzeugt (in 1);
- man vorübergehend das so erzeugte Wasserstoffperoxid in mindestens einem Pufferspeicher (2) speichert;
- man dem Pufferspeicher eine variable Menge des Wasserstoffperoxids entnimmt, die, gegebenenfalls nach einer Verdünnung (in 3), der genannten Menge D entspricht und diese zur verarbeitenden Einheit (4) leitet.

2. Verfahren nach Anspruch 1, dadurch gekennzeichnet, daß man, falls der Pegel der Flüssigkeit im Pufferspeicher (2) unter den vorbestimmten Pegel (N2) absinkt, einem Hilfsbehälter (5) Wasserstoffperoxid entnimmt, insbesondere einer Konzentration C3, die deutlich höher als der Wert C1 ist, dieses gegebenenfalls mit Wasser bis zur Konzentration C1 verdünnt und zur verarbeitenden Einheit (4) leitet.

3. Verfahren nach Anspruch zum Einbringen von Wasserstoffperoxid einer Konzentration C3, die deutlich höher als der Wert C1 ist, in eine verarbeitende Einheit(4), dadurch gekennzeichnet, daß man, falls der Pegel der Flüssigkeit im Pufferspeicher (2) unter den vorbestimmten Pegel (N2) absinkt, einem Hilfsbehälter (5) Wasserstoffperoxid der Konzentration C3 entnimmt und dieses zur verarbeitenden Einhcit (4) leitet.

4. Verfahren nach irgendeinem der Ansprüche 1 bis 3, dadurch gekennzeichnet, daß die verarbeitete Menge D zwischen 0 und einem Wert D1 und die erzeugte Menge zwischen zwei Werten D2 und D3 schwankt, wobei D3-D2 < D1 ist.

5. Verfahren nach Anspruch 4, dadurch gekennzeichnet, daß die Werte D2 und D3 jeweils ungefähr 50 und 110 % einer Produktionsnennmenge DN des Wasserstoffperoxids entsprechen, wohingegen der Wert D1 ungefähr 400 % dieses Wertes DN entspricht.

6. Verfahren nach irgendeinem der Ansprüche 1 bis 5, dadurch gekennzeichnet, daß der Wert C2 zwischen ungefähr 2 und 45 %, insbesondere zwischen ungefähr 15 und 30 %, liegt, wohingegen der Wert C3, wenn man einen Hilfsbehälter (5) verwendet, zwischen ungefähr 45 und 80 % liegt.

7. Vorrichtung zur Durchführung eines Verfahrens nach irgendeinem der Ansprüche 1 bis 6, dadurch gekennzeichnet, daß sie folgendes aufweist:
- eine Produktionsvorrichtung (1) für Wasserstoffperoxid einer Konzentration C2;
- mindestens ein Pufferspeicher(2), der über ein Leitungssystem (6) mit der Produktionsvorrichtung verbunden ist;
- eine eine variable Menge D des Wasserstoffperoxids verarbeitende Einheit (4), die durch ein Leitungssystem (8, 11; 8) mit dem Pufferspeicher verbunden ist.

8. Vorrichtung nach Anspruch 7, dadurch gekennzeichnet, daß sie darüber hinaus einen Hilfsbehälter (5) enthält, der mit Wasserstoffperoxid einer Konzentration C3 gefüllt ist, die insbesondere deutlich über der Konzentration C1 des Wasserstoffperoxids liegt, das in der verarbeitenden Einheit (4) verarbeitet wird, und mit letzterer durch ein weiteres Leitungssystem (12, 8, 11; 12, 8) verbunden ist.

9. Vorrichtung nach Anspruch 8, dadurch gekennzeichnet, daß sie darüber hinaus eine Verdünnungsvorrichtung (3) enthält, die zwischen dem Hilfsbehälter (5) und der verarbeitenden Einheit (4) angeordnet ist.

10. Vorrichtung nach Anspruch 9, dadurch gekennzeichnet, daß die Verdünnungsvorrichtung (3) auch zwischen der Produktionsvorrichtung (1) und der verarbeitenden Einheit (4) angeordnet ist.

11. Vorrichtung nach irgendeinem der Ansprüche 7 bis 10, dadurch gekennzeichnet, daß der Pufferspeicher eine thermische Isolation (18) und/oder eine Heizvorrichtung (19) aufweist.

12. Vorrichtung nach irgendeinem der Ansprüche 7 bis 11, dadurch gekennzeichnet, daß die Produktionsvorrichtung (1) so bemessen ist, daß sie eine zwischen zwei Werten D2 und D3 schwankende Menge des Wasserstoffperoxids liefert, wobei D3-D2 < D1 und D1 die maximal von der verbrauchenden Einheit (4) verbrauchte Menge ist.
